Europäisches Patentamt

European Patent Office

Office européen des brevets

(19)

(11) **EP 1 413 388 A1**

(12) **EUROPEAN PATENT APPLICATION**

(43) Date of publication:
**28.04.2004 Bulletin 2004/18**

(51) Int Cl.7: **B23Q 1/38**, B23Q 11/00,
F16C 29/02

(21) Application number: **03023587.3**

(22) Date of filing: **16.10.2003**

| | |
|---|---|
| (84) Designated Contracting States:<br>**AT BE BG CH CY CZ DE DK EE ES FI FR GB GR**<br>**HU IE IT LI LU MC NL PT RO SE SI SK TR**<br>Designated Extension States:<br>**AL LT LV MK**<br><br>(30) Priority: **25.10.2002 JP 2002310360**<br><br>(71) Applicant: **Mori Seiki Co., Ltd.**<br>**Yamatokoriyama-shi, Nara 639-1160 (JP)** | (72) Inventors:<br>• **Kawahara, Kenichi**<br>**Yamatokoriyama-shi Nara 639-1160 (JP)**<br>• **Saraie, Hidenori**<br>**Yamatokoriyama-shi Nara 639-1160 (JP)**<br><br>(74) Representative: **Weise, Reinhard, Dipl.-Ing.**<br>**Reinhard-Skuhra-Weise & Partner**<br>**Patentanwälte**<br>**Postfach 44 01 51**<br>**80750 München (DE)** |

(54) **Machine tool with hydrostatic slideways with variable pressure**

(57)     A machine tool (1) is provided in which a movable member (30) guided by a hydrostatic slideway (21,31) is held in a predetermined attitude. A vertical machining center as the machine tool includes a spindle head (30) supported on a front face of a column (20) in a vertically movable manner. A hydrostatic slideway (21,31) for guiding the spindle head includes a slide rail (31) provided on the spindle head (30) and a slide guide (21) provided on the front face of the column (20). A pocket is provided in a lower end portion of a slideway of the slide guide on the side of the column. Pressurized oil is supplied into the pocket at a pressure which is gradually increased according to a downward movement distance of the spindle head from the uppermost position.

F i g . 1

EP 1 413 388 A1

## Description

## BACKGROUND OF THE INVENTION

### Field of the Invention

The present invention relates to a machine tool (e.g., a machining center, a lathe or a grinder) which comprises a hydrostatic slideway for guiding a movable member such as a spindle head or a table for movement of the movable member, the hydrostatic slideway including opposed slideways between which a pressurized fluid such as pressurized oil or pressurized air is supplied.

### Description of Related Art

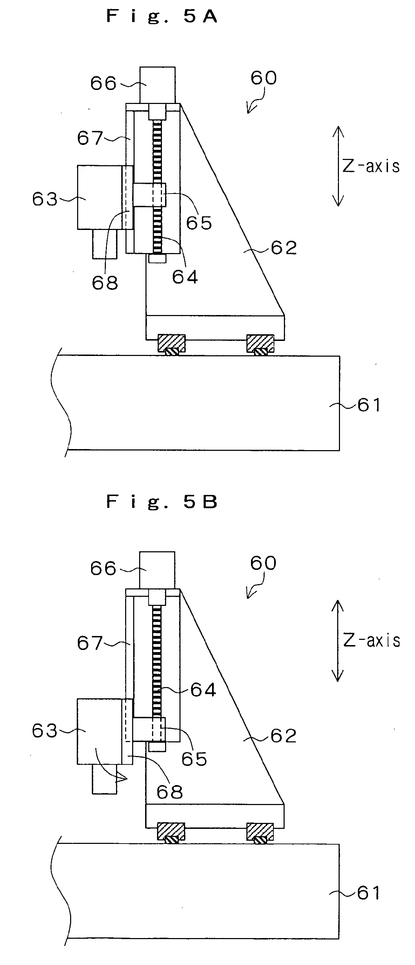

In a vertical machining center 60 as shown in Fig. 5A, a spindle head 63 is supported on a front face of a column 62 provided upright on a bed 61 with the intervention of a hydrostatic slideway for up and down movement thereof along the Z-axis . The spindle head 63 is moved up and down along the Z-axis by means of a lift drive mechanism which includes a ball thread 64 supported by the column 62 for fixed-point rotation, a ball nut 65 attached to the spindle head 63 in threading engagement with the ball thread 64 and a motor 66 for rotatively driving the ball thread 64.

The hydrostatic slideway includes a slide rail 67 attached to the front face of the column 62 and defining a stationary side slideway, and a slide guide 68 attached to the spindle head 63 and defining a movable side slideway. A pocket is provided in the slideway on the slide guide 68, and pressurized oil is constantly supplied at a predetermined pressure into the pocket. Thus, the spindle head 63 is smoothly moved up and down along the slide rail 67, while a sliding resistance occurring between the slide rail 67 and the slide guide 68 is suppressed (see, for example, Japanese Examined Patent Publication No. 46-28578 (1971)).

In the aforesaid vertical machining center 60, however, a lower end portion of the slide guide 68 projects downward from a lower end of the slide rail 67 as shown in Fig. 5B when the spindle head 63 is lowered. Since a rotational moment is applied to the spindle head 63 in a direction indicated by an arrow about the ball nut 65 threadingly engaged with the ball thread 64, a lower end portion of the spindle head 63 is inclined toward the ball thread 64 correspondingly to a gap defined between the slide rail 67 and the slide guide 68. Further, the lower end portion of the slide rail 67 is warped toward the ball thread 64 thereby to be deformed. As a result, the lower end portion of the spindle head 63 is inclined toward the ball thread 64.

Conceivable approaches to this problem are to reduce the gap between the slide rail 67 and the slide guide 68 (a gap between the slideways) to increase the rigidity, and to extend the slide rail 67 further downward so that the lower end portion of the slide guide 68 does not project downward from the lower end of the slide rail 67 when the spindle head 63 is lowered.

If the rigidity is increased by reducing the gap between the slide rail 67 and the slide guide 68, the sliding resistance is increased. This makes it impossible to smoothly move up and down the spindle head 63.

Where the vertical machining center 60 is provided with an automatic tool changer for automatically attaching a tool to a spindle, a tool changer arm (not shown) is moved just below the spindle head 63. For prevention of interference between the tool changer arm and the spindle head, it is impossible to extend the slide rail 67 to a desired height level.

It is therefore an object of the present invention to provide a machine tool in which a movable member guided by a hydrostatic slideway can be held in a predetermined attitude.

## SUMMARY OF THE INVENTION

According to a first aspect of the present invention to achieve the aforesaid object, there is provided a machine tool, which comprises a hydrostatic slideway for guiding a movable member for movement of the movable member, the hydrostatic slideway comprising opposed slideways between which a pressurized fluid is supplied, one of the slideways of the hydrostatic slideway having an independent pocket provided in one of opposite end portions thereof with respect to a sliding direction, wherein the pressurized fluid is supplied into the pocket at a pressure which is continuously varied according to a movement distance of the movable member from a reference position.

In this machine tool, the independent pocket is provided in the one end portion of the one slideway of the hydrostatic slideway, and the pressure of the pressurized fluid supplied into the pocket is continuously varied according to the movement distance of the movable member from the reference position. The movable member moving in one direction may have an attitude which is changed along that movement direction for some reason. In this case, the change in the attitude of the movable member can be minimized by properly controlling the supply pressure of the pressurized fluid. Since the pressure of the pressurized fluid supplied into the pocket is continuously varied in this machine tool, the movable member can be held in a predetermined attitude across the entire stroke without correcting the attitude of the movable member stepwise.

According to a second aspect of the present invention, there is provided a machine tool, which comprises a hydrostatic slideway for guiding a spindle head for up and down movement of the spindle head, the hydrostatic slideway comprising opposed slideways between which a pressurized fluid is supplied, wherein one of the slideways of the hydrostatic slideway has an independent pocket provided in one of lower and upper end portions thereof, wherein the pressurized fluid is supplied into the pocket at a pressure which is gradually increased according to a downward movement distance of the spindle head. Even if a lower end portion of the slideway on the spindle head projects downward from a lower end of the opposed slideway when the spindle head is lowered, the spindle head can smoothly be moved up and down while being held in a predetermined attitude without inclination of a lower portion of the spindle head, unlike the conventional machine tool in which the pressurized oil is constantly supplied at the predetermined pressure into the pocket provided in the slideway on the spindle head.

Since the pressure of the pressurized fluid supplied into the pocket provided in the slideway is gradually (continuously) increased according to the downward movement distance of the spindle head, the spindle head can be held in the predetermined attitude across the entire stroke without correcting the attitude of the spindle head stepwise. This eliminates a possibility that a machined workpiece has a stepped surface, allowing for precision machining of the workpiece.

Where the spindle head has a short movement stroke, the slideway on the spindle head does not significantly project from the opposed slideway when the spindle head is moved down to the lowermost position. Therefore, the slideway is less liable to be warped and deformed, so that the spindle head is merely inclined correspondingly to a gap defined between the opposed slideways. In this case, it is desirable that a pressure increase of the pressurized fluid supplied into the pocket is varied linearly with respect to the downward movement distance of the spindle head.

In contrast, where the spindle head has a long movement stroke, the slideway on the spindle head significantly projects from the opposed slideway when the spindle head is moved down to the lowermost position. Therefore, when the spindle head is lowered, the slideway is liable to be warped and deformed, and the spindle head tends to be inclined due to the deformation of the slideway. In this case, it is desirable that a pressure increase of the pressurized fluid supplied into the pocket is varied nonlinearly with respect to the downward movement distance of the spindle head.

The foregoing and other objects, features and effects of the present invention will become more apparent from the following description of the preferred embodiments with reference to the attached drawings.

**BRIEF DESCRIPTION OF THE DRAWINGS**

Fig. 1 is a perspective view illustrating a vertical machining center as a machine tool according to one embodiment of the present invention;
Figs. 2A and 2B are partial side views illustrating the vertical machining center;
Fig. 3 is a diagram illustrating in detail a hydrostatic slideway which guides a spindle head in the vertical machining center;
Figs. 4A and 4B are diagrams illustrating the arrangements of pockets provided in the hydrostatic slideway; and
Figs. 5A and 5B are schematic side views illustrating a spindle head in a conventional machining center.

**DESCRIPTION OF THE PREFERRED EMBODIMENTS**

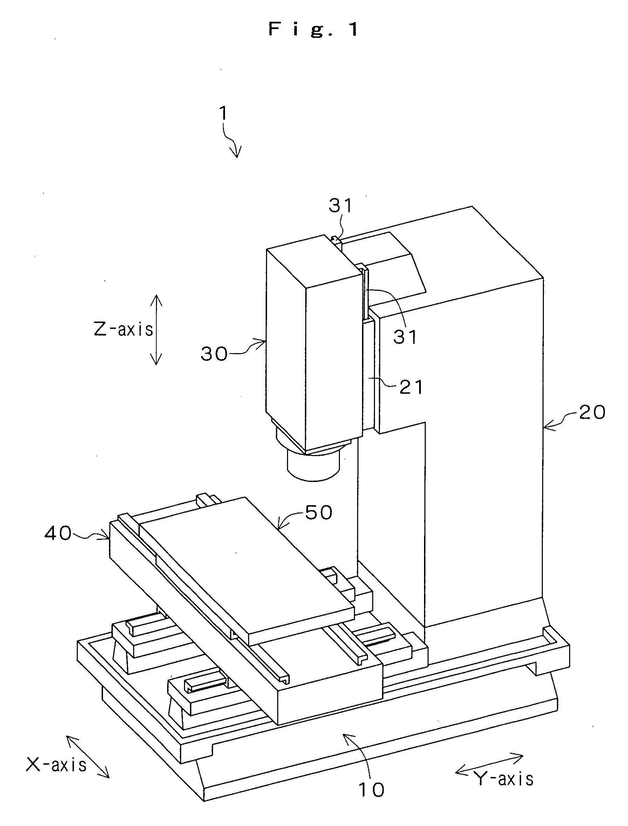

An embodiment of the present invention will hereinafter be described with reference to the attached drawings. As shown in Fig. 1, a machine tool 1 is a vertical machining center which includes a column 20 disposed upright on a rear portion of a bed 10 , a spindle head 30 supported on a front face of the column 20 in a vertically movable manner, a saddle 40 provided in front of the column 20 on the bed 10 and movable forward and rearward (along the Y-axis), and a table 50 provided on the saddle 40 and movable laterally (along the X-axis).

The spindle head 30, the saddle 40 and the table 50 as movable members are respectively guided in their movement directions by hydrostatic slideways each including a movable side slideway and a stationary side slideway engaged with each other. A hydraulic pressure applying unit supplies pressurized oil into a gap defined between the slideways to suppress a sliding resistance occurring between the slideways.

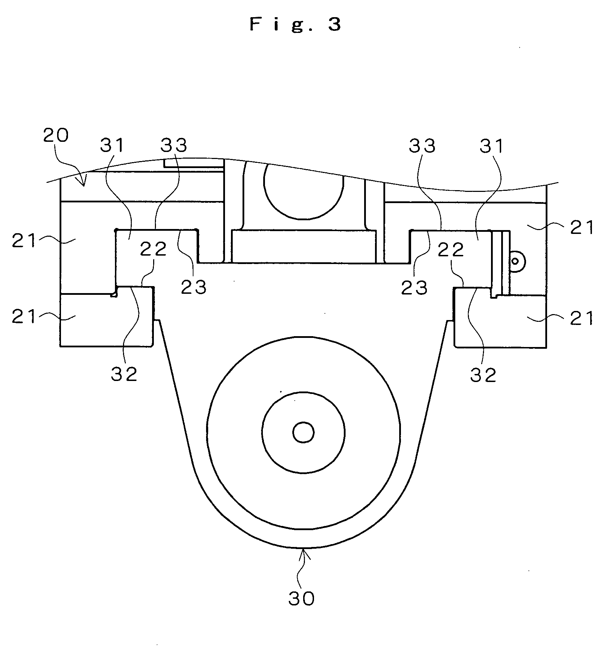

As shown in Fig. 3, the hydrostatic slideway for guiding the spindle head 30 along the Z-axis includes two slide rails 31 provided on the spindle head 30 and each defining movable side slideways 32, 33, and slide guides 21 provided on the front face of the column 20 in engagement with the slide rails 31 and each defining stationary side slideways 22, 23.

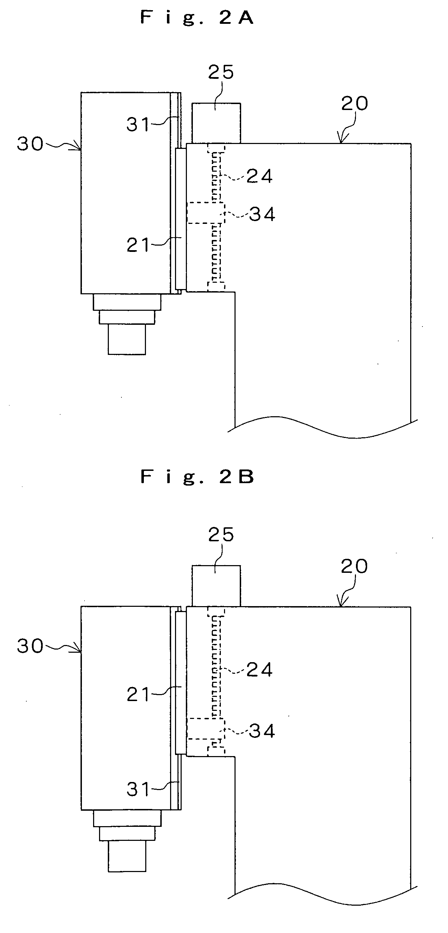

As shown in Fig. 2A, a lift drive mechanism for moving up and down the spindle head 30 along the Z-axis includes a ball thread 24 supported by the column 20 for fixed-point rotation, a motor 25 for rotatively driving the ball thread 24, and a ball nut 34 attached to the spindle head 30 in threading engagement with the ball thread 24. When the spindle head 30 is located at the lowermost position, lower end portions of the slide rails 31 project downward from lower ends of the slide guides 21 as shown in Fig. 2B.

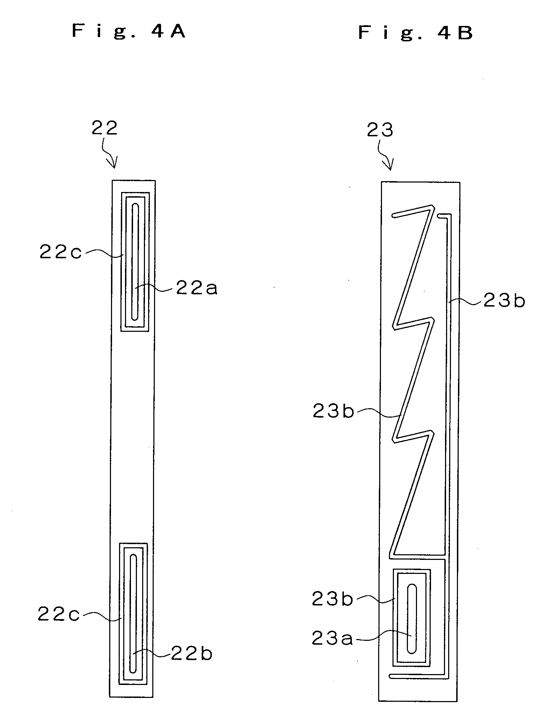

As shown in Fig. 4A, the slideways 22 of the slide guides 21 each have pockets 22a and 22b respectively provided in upper and lower end portions thereof, and oil channels 22c respectively surrounding the pockets 22a and 22b. The pressurized oil is constantly supplied at a pressure of 0.5 MPa into the respective pockets 22a, 22b.

As shown in Fig. 4B, the slideways 23 of the slide guides 21 each have an independent pocket 23a provided in a lower end portion thereof for receiving the pressurized oil supplied thereto, and an oil channel 23b surrounding the pocket 23a. The pressure of the pressurized oil supplied into the pockets 23a is increased from 0.5 MPa to 1.0 MPa proportionally to a downward movement distance of the spindle head 30 from the uppermost position.

The supply pressure Pd of the pressurized oil is calculated from the following expression (1):

$$Pd = \frac{P2\text{-}P1}{S} \times Sd + P1 \qquad (1)$$

wherein S is a Z-axis stroke (350mm) of the spindle head 30, P1 is the supply pressure (0.5 MPa) of the pressurized oil observed when the spindle head 30 is located at the uppermost position, P2 is the supply pressure (1.0 MPa) of the pressurized oil observed when the spindle head 30 is located at the lowermost position, and Sd is the downward movement distance of the spindle head 30 from the uppermost position.

In this machine tool 1, as described above, the pockets 22a and 22b are respectively provided in the upper and lower end portions of the slideways 22 of the slide guides 21 of the hydrostatic slideway, and the independent pockets 23a are provided in the lower end portions of the slideways 23 of the slide guides 21. While the pressure of the pressurized oil supplied into the pockets 22a, 22b is kept constant, the pressure of the pressurized oil supplied into the pockets 23a is increased proportionally to the downward movement distance of the spindle head 30 from the uppermost position. Even if the lower end portions of the slide rails 31 project downward from the lower ends of the slide guides 21 as shown in Fig. 2B (i . e . , a lower end portion of the spindle head 30 projects downward) when the spindle head 30 is moved down, a rotational moment applied to the spindle head 30 is balanced with the pressure of the pressurized oil supplied to the hydrostatic slideway (the pockets 23a provided in the slideways 23) . Thus, the spindle head 30 can smoothly be moved up and down, while being held in a predetermined attitude without rearward inclination of the lower end portion of the spindle head 30 toward the column 20.

In the machine tool 1, the pressure of the pressurized oil supplied into the pockets 23a provided in the slideways 23 is gradually (continuously) increased according to the downward movement distance of the spindle head 30. Therefore, the spindle head 30 can be held in the predetermined attitude across the entire stroke without correcting the attitude of the spindle head 30 stepwise. This eliminates a possibility that a machined workpiece has a stepped surface, allowing for precision machining of the workpiece.

In the aforesaid embodiment, the spindle head 30 has a short movement stroke and, when the spindle head 30 is moved down to the lowermost position, the slideways (slide rails 31) on the spindle head 30 do not significantly project from the slideways (slide guides 21) on the column 20. Therefore, the slideways (slide guides 21) on the column 20 are less liable to be warped and deformed, and the spindle head 30 tends to be merely inclined correspondingly to gaps defined between the opposed slideways. Therefore, the pressure increase of the pressurized oil supplied into the pockets 23a is varied linearly (proportionally) with respect to the downward movement distance of the spindle head 30. However, the relation between the pressure increase of the pressurized oil and the downward movement distance of the spindle head is not limited to the linear relation. Where the spindle head 30 has a long movement stroke, for example, the slideways (slide rails 31) on the spindle head 30 significantly project from the slideways (slide guides 21) on the column 20 when the spindle head 30 is moved down to the lowermost position. Therefore, the slideways (slide guides 21) on the column 20 are liable to be warped and deformed, and the spindle head 30 tends to be inclined due to the deformation of the slideways when the spindle head 30 is moved down. In this case, it is desirable that the pressure increase of the pressurized oil supplied into the pockets 23a is varied nonlinearly (quadratically or logarithmically) with respect to the downward movement distance of the spindle head 30.

Where the pressure increase of the pressurized oil supplied into the pockets 23a is varied quadratically with respect to the downward movement distance of the spindle head 30, the supply pressure Pd of the pressurized oil is calculated from the following expression (2):

$$Pd = \frac{P2\text{-}P1}{S^2} \times Sd^2 + P1 \qquad (2)$$

wherein S is the Z-axis stroke (350mm) of the spindle head 30, P1 is the supply pressure (0.5 MPa) of the pressurized oil observed when the spindle head 30 is located at the uppermost position, P2 is the supply pressure (1.0 MPa) of the pressurized oil observed when the spindle head 30 is located at the lowermost position, and Sd is the downward movement distance of the spindle head 30 from the uppermost position.

In the embodiment described above, the pockets 23a are provided in the lower end portions of the slideways 23 of the slide guides 21, but the arrangement for the pockets is not limited thereto. For example, pockets may additionally be provided in the slideways 23 in association with the pockets 22a, and constantly supplied with the pressurized oil at 0.5 MPa, like the pockets 22a, 22b.

In the embodiment described above, the pressure of the pressurized oil supplied into the pockets 22a and 22b provided in the upper and lower end portions of the slideways 22 of the slide guides 21 on the side of the spindle head 30 is kept constant, while the pressure of the pressurized oil supplied into the pockets 23a provided in the lower end portions of the slideways 23 of the slide guides 21 on the side of the column 20 is gradually increased according to the downward movement distance of the spindle head 30. However, the arrangement for the supply of the pressurized oil into the respective pockets is not limited to that described above. For example, the pressure of the pressurized oil supplied into the pocket 22a may gradually be increased according to the downward movement distance of the spindle head 30, while the pressure of the pressurized oil supplied into the pockets 22b, 23a is kept constant. This arrangement also provides the same effects. In this case, it is not necessarily required to provide the pockets in the slideways 23 of the slide guides 21 on the side of the column 20 for supplying thereto the pressurized oil.

In the embodiment described above, the pressure of the pressurized oil supplied into the pockets 22a, 22b provided in the slideways 22 is set at 0.5 MPa, while the pressure of the pressurized oil supplied into the pockets 23a provided in the slideways 23 is variably set at 0.5 MPa to 1.0 MPa. The pressures of the pressurized oil supplied into the respective pockets are not limited to those described above, but may properly be determined in consideration of a change in the attitude of the spindle head 30.

The embodiment described above employs the pressurized oil as the pressurized fluid to be supplied into the pockets 22a, 22b provided in the slide guides 21, but the pressurized fluid is not limited to the pressurized oil. For example, pressurized air may be employed instead of the pressurized oil for the hydrostatic slideway.

In the embodiment described above, the hydrostatic slideway for guiding the spindle head 30 along the Z-axis includes the slide rails 31 provided on the spindle head 30 and the slide guides 21 provided on the front face of the column 20, but the arrangement for the hydrostatic slideway is not limited thereto. The hydrostatic slideway may be constituted by slide rails provided on the front face of the column 20 and slide guides provided on the spindle head 30. The present invention is, of course, applicable to a machine tool employing such a hydrostatic slideway.

The aforesaid embodiment of the present invention is directed to the hydrostatic slideway for guiding the spindle head 30 along the Z-axis . However, the movable member to be guided by the hydrostatic slideway is not limited to the spindle head 30. The present invention is applicable to a hydrostatic slideway for guiding a saddle, a table or a column which is movable horizontally and is likely to suffer from the same problem (i. e., the problem that the attitude thereof is liable to change during movement thereof). This arrangement also provides the same effects. In this case, an independent pocket is provided in one end portion of one of the slideways of the hydrostatic slideway, and the pressure of the pressurized fluid supplied into the pocket is continuously varied according to the movement distance of the movable member from a reference position.

The application of the present invention is not limited to the vertical machining center, but the present invention is applicable to any of various machine tools such as horizontal machining centers, lathes and grinders, in which a movable member is guided by a hydrostatic slideway.

While the present invention has been described in detail by way of the embodiment thereof, it should be understood that the foregoing disclosure is merely illustrative of the technical principles of the present invention but not limitative of the same. The spirit and scope of the present invention are to be limited only by the appended claims.

## Claims

1. A machine tool comprising a hydrostatic slideway for guiding a movable member for movement of the movable member, the hydrostatic slideway comprising opposed slideways between which a pressurized fluid is supplied, one of the slideways of the hydrostatic slideway having an independent pocket provided in one of opposite end portions thereof with respect to a sliding direction, wherein the pressurized fluid is supplied into the pocket at a pressure which is continuously varied according to a movement distance of the movable member from a reference position.

2. A machine tool comprising a hydrostatic slideway for guiding a spindle head for up and down movement of the spindle head, the hydrostatic slideway comprising opposed slideways between which a pressurized fluid is supplied, wherein one of the slideways of the hydrostatic slideway has an independent pocket provided in one of lower and upper end portions thereof, wherein the pressurized fluid is supplied into the pocket at a pressure which is gradually increased according to a downward movement distance of the spindle head.

3. A machine tool as set forth in claim 2, wherein a pressure increase of the pressurized fluid supplied into the pocket is varied linearly with respect to the downward movement distance of the spindle head.

4. A machine tool as set forth in claim 2, wherein a pressure increase of the pressurized fluid supplied into the pocket is varied nonlinearly with respect to the downward movement distance of the spindle head.

5. A machine tool as set forth in claim 2, wherein a pressure increase of the pressurized fluid supplied into the pocket is varied quadratically with respect to the downward movement distance of the spindle head.

6. A machine tool as set forth in claim 2, wherein a pressure increase of the pressurized fluid supplied into the pocket is varied logarithmically with respect to the downward movement distance of the spindle head.

# F i g . 1

F i g . 2 A

F i g . 2 B

Fig. 3

F i g . 4 A           F i g . 4 B

22

22c

22a

22c

22b

23

23b

23b

23b

23a

Ｆｉｇ．５Ａ

Ｆｉｇ．５Ｂ

**European Patent Office**

## EUROPEAN SEARCH REPORT

Application Number

EP 03 02 3587

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 3 484 064 A (KOENIG CARL FRED) 16 December 1969 (1969-12-16) * column 5, line 30-50; figure 6 * --- | 1-6 | B23Q1/38 B23Q11/00 F16C29/02 |
| X | US 3 260 162 A (JOHN ATHERTON) 12 July 1966 (1966-07-12) * the whole document * --- | 1-6 | |
| X | US 3 831 283 A (PAGELLA E ET AL) 27 August 1974 (1974-08-27) * column 6, line 5-15 * --- | 1-6 | |
| X | GB 2 160 975 A (MITUTOYO MFG CO LTD) 2 January 1986 (1986-01-02) * figure A * --- | 1-6 | |
| X | US 4 563 820 A (ISOHATA JUNJI) 14 January 1986 (1986-01-14) * figure A * ----- | 1-6 | |

TECHNICAL FIELDS SEARCHED (Int.Cl.7)

B23Q
F16C

The present search report has been drawn up for all claims

| Place of search | Date of completion of the search | Examiner |
|---|---|---|
| MUNICH | 29 January 2004 | Lasa, A |

## ANNEX TO THE EUROPEAN SEARCH REPORT
## ON EUROPEAN PATENT APPLICATION NO.

EP 03 02 3587

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2004

| Patent document cited in search report | | Publication date | Patent family member(s) | | Publication date |
|---|---|---|---|---|---|
| US 3484064 | A | 16-12-1969 | NONE | | |
| US 3260162 | A | 12-07-1966 | GB | 1076404 A | 19-07-1967 |
| | | | DE | 1477109 A1 | 06-03-1969 |
| | | | FR | 1389129 A | 12-02-1965 |
| US 3831283 | A | 27-08-1974 | CA | 969756 A1 | 24-06-1975 |
| | | | CH | 537570 A | 31-05-1973 |
| | | | DD | 101974 A5 | 20-11-1973 |
| | | | DE | 2231644 A1 | 18-01-1973 |
| | | | FR | 2145931 A5 | 23-02-1973 |
| | | | GB | 1393035 A | 07-05-1975 |
| | | | SU | 518161 A3 | 15-06-1976 |
| GB 2160975 | A | 02-01-1986 | JP | 60238701 A | 27-11-1985 |
| | | | JP | 60238702 A | 27-11-1985 |
| | | | JP | 60238709 A | 27-11-1985 |
| | | | DE | 3517421 A1 | 21-11-1985 |
| US 4563820 | A | 14-01-1986 | JP | 59078533 A | 07-05-1984 |
| | | | DE | 3338727 A1 | 03-05-1984 |
| | | | GB | 2131186 A ,B | 13-06-1984 |

EPO FORM P0459

For more details about this annex : see Official Journal of the European Patent Office, No. 12/82